# EUROPEAN PATENT SPECIFICATION

(11) **EP 4 365 054 B1**
(45) Date of publication and mention of the grant of the patent: **18.02.2026**
(21) Application number: 22831123.9
(22) Date of filing: 05.01.2022
(51) Int. Cl.: B61F 1/14, B61F 1/08

(54) **CHASSIS EDGE BEAM, CHASSIS STRUCTURE AND RAIL VEHICLE**
FAHRWERKSKANTENTRÄGER, FAHRWERKSSTRUKTUR UND SCHIENENFAHRZEUG
POUTRE DE RIVE DE CHÂSSIS, STRUCTURE DE CHÂSSIS ET VÉHICULE FERROVIAIRE

(30) Priority: 28.06.2021 CN 202110723037
(43) Date of publication of application: 08.05.2024
(73) Proprietor: CRRC Qingdao Sifang Co., Ltd., Qingdao, Shandong 266111 (CN)
(72) Inventor: WANG, Yanqing, Qingdao, Shandong 266111 (CN); SUN, Weiguang, Qingdao, Shandong 266111 (CN); ZHANG, Zeyun, Qingdao, Shandong 266111 (CN); YU, Yangyang, Qingdao, Shandong 266111 (CN); TIAN, Honglei, Qingdao, Shandong 266111 (CN)
(74) Representative: Prinz & Partner mbB
(86) International application number: PCT/CN2022/070217
(87) International publication number: WO 2023/273286

(56) References cited:
- WO-A1-2020/177589
- CN-A- 107 571 884
- CN-A- 110 027 586
- CN-A- 111 762 217
- CN-A- 111 762 219
- CN-A- 111 762 219
- CN-A- 112 061 162
- CN-U- 204 341 072
- JP-A- 2017 043 278

## Description

This application claims the priority of the Chinese Patent Application No. 202110723037.7, titled "UNDERFRAME SIDE BEAM, UNDERFRAME STRUCTURE AND RAIL VEHICLE", filed on June 28, 2021 with the China National Intellectual Property Administration.

### FIELD

The present application relates to the technical field of rail vehicles, and in particular to an underframe side beam of a rail vehicle. The present application further relates to an underframe structure provided with the underframe side beam and a rail vehicle provided with the underframe structure.

There are in CN111762217A an under-vehicle arrangement structure and a railway vehicle. The under-vehicle arrangement structure includes a pair of boundarybeams and suspension equipment. The boundary beams are arranged on two transverse sides of a vehicle body and extend lengthwise along the vehicle body. An equipment mounting base is constructed on an inner side of each boundary beam. The equipment mounting base includes a horizontal transverse rib which inwards and horizontally extends along the inner side of the boundary beam, and a support inclined rib which is positioned below the horizontal transverse rib and has one end connected with the inner side of each boundary beam and the other end connected with an extending end of the horizontal transverse rib. Notches for disconnecting the equipment mounting base are formed in the pair of boundary beams at intervals in a one-to-one correspondence manner in a length direction. Each section of horizontal transverse rib is provided with a first open groove formed in the length direction of the horizontal transverse rib, and the support inclined rib is provided with a second open groove opposite to the first open groove. The suspension equipment is fixed below a suspension beam. The two ends of the suspension beam enter the upper portion of the horizontal transverse rib through the notches and are erected on the horizontal transverse rib, and the suspension beam and the horizontal transverse rib are connected in a fastened mode through fasteners.

There are disclosed in CN111762219A a bottom frame boundary beam, a vehicle body bottom frame, a railway vehicle body and a railway vehicle. The bottom frameboundary beam includes a boundary beam body and an equipment pulling and hanging part. The boundary beam body includes an outer side beam and an inner side beam. The equipment pulling and hanging part is arranged on one side, back to the outer side beam, of the inner side beam. The equipment pulling and hanging part includes a supporting transverse rib, a shielding longitudinal rib and a connecting inclined rib. One end of the supporting transverse rib is connected with the inner side beam, and the other end of the supporting transverse rib is connected with the bottom of the shielding longitudinal rib. The top of the shielding longitudinal rib is connected with one end of the connecting inclined rib. The other end of the connecting inclined rib is connected with the inner side beam. The connecting inclined rib, the inner side beam, the supporting transverse rib and the shielding longitudinal rib define an under-vehicle equipment mounting cavity.

### BACKGROUND

With the development of internationalization of rail transit industry, China's export of high-speed electric multiple units (EMUs) and a demand for foreign markets are increasing day by day. The high-speed EMUs is fast, safe, reliable, energy-saving and efficient. However, different countries have different limit requirements for the rail vehicle. Export high-speed EMUs need to meet the limit requirements of various vehicles for foreign countries on the basis of the research and development of China high-speed EMUs technology platform. The marshalling type, vehicle section, vehicle dynamic envelope, vehicle body structure, vehicle spacing, bogie mounting and under-vehicle large-scale apparatus mounting are all the contents that need to be studied.

An underframe is a key component of the vehicle body, and a side beam is one of the important main structures of the underframe, which plays a role in structural strength of the vehicle body, in connection between the bogie and the vehicle body, and in mounting of the under-vehicle apparatus. The side beam and an underframe structure with the side beam are important factors for the vehicle to meet the limit requirements and the strength of the vehicle body.

In the conventional technology, CR300AF, CR400AF, CRH2A, CRH380A and other high-speed EMUs are designed based on the mounting space and structure for the bogie and the under-vehicle apparatus, resulting in large widths of these high-speed EMUs, which cannot meet the limit requirements in foreign countries, such as Europe countries. In particular, there are several kinds of catenary power supply systems in foreign lines, and a high-voltage apparatus of the high-speed EMUs adopts double-current or three-current structure, which is particularly large in size and heavy in weight, while the narrow vehicle body has a problem of insufficient mounting space for the under-vehicle apparatus.

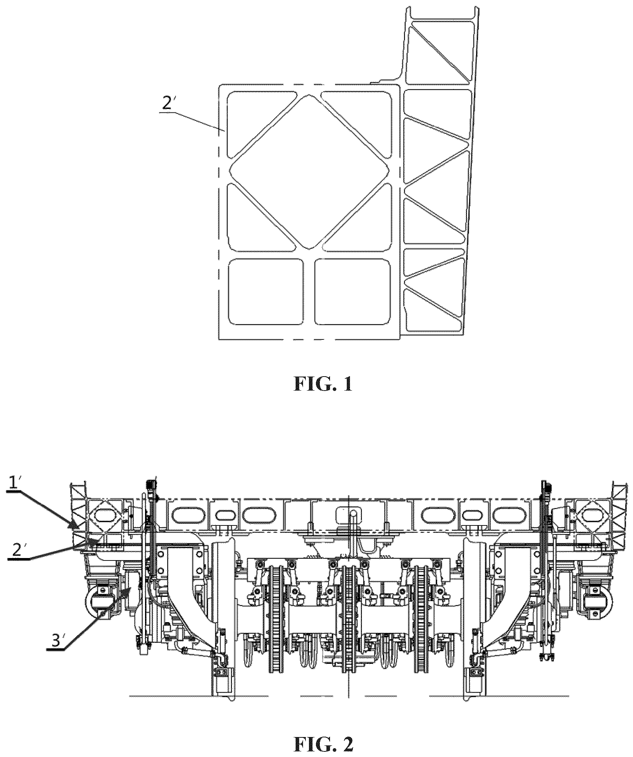

With reference to FIG. 1 and FIG. 2, FIG. 1 is a schematic view showing a mounting of a yaw damper seat for a high-speed EMUs in the conventional technology, and FIG. 2 is a schematic view showing a mounting of a bogie of the high-speed EMUs in the conventional technology.

As shown in the drawings, in the conventional technology, the yaw damper seat 2' is welded inside the vehicle body of the high-speed EMUs, and the underframe 1' is also welded, as a result of which the welding stress may generate, and the fatigue strength of a mounting area of the underframe is relatively low. Moreover, the width of the underframe 1' is restricted by the vehicle limit, and the mounting area of the bogie 3' is limited to the inside of the two side beams. In a case that the width of the underframe restricted by the vehicle limit is relatively small and the minimum width of the bogie 3' itself is limited, the mounting space for the bogie 3' cannot be guaranteed, thus it is difficult to realize the mounting of the bogie 3' and the vehicle body.

In order to meet the limit requirements of different vehicles at home and abroad, as well as the requirements of the mounting space and structure for the large-scale apparatus, higher-leveled design requirements have been proposed for the underframe structure of the vehicle body structure.

### SUMMARY

An object of the present application is to provide an underframe side beam, which can meet the limit requirements of different vehicles at home and abroad on the outer contour of the vehicle body structure and can flexibly match the vehicle body structure with different vehicle widths.

Another object of the present application is to provide an underframe structure provided with the underframe side beam.

Still another object of the present application is to provide a rail vehicle provided with the underframe structure.

In order to achieve the above objects, an underframe side beam is provided according to the present application, which is an integrally extruded aluminum alloy profile structure, including a first layer profile cavity, a second layer profile cavity, a third layer profile cavity and a fourth layer profile cavity, and a top portion of the first layer profile cavity is provided with a profile insertion structure for inserting and welding with a side wall of a vehicle body; an inner side surface of the second layer profile cavity is provided with a profile lap-joint structure with an opening, facing an inner side of the vehicle body, at an upper edge; and a bottom transverse wall of the third layer profile cavity is a thickened profile cavity wall.

An outer surface of the first layer profile cavity is on a same profile surface with outer surfaces of the second layer profile cavity, the third layer profile cavity and the fourth layer profile cavity, a width of the first layer profile cavity is smaller than that of the second layer profile cavity, the third layer profile cavity and the fourth layer profile cavity, and an inner surface of the first layer profile cavity forms a step portion with inner surfaces of the second layer profile cavity, the third layer profile cavity and the fourth layer profile cavity.

A bottom portion of the fourth layer profile cavity is provided with an embedded slide groove for hanging and mounting the bolt of under-vehicle apparatus compartment, and an inner side surface of the fourth layer profile cavity is provided with an inside lap-joint structure for lap-welding of the underframe transverse beam.

In a local area where a bogie is connected with the vehicle body, the lower fourth layer profile cavity is configured to be removed from the side beam profile by processing, so that a mounting surface for mounting the bogie including the underframe side beam, a bolster beam and a traction beam is a plane in connection area between the bogie and the vehicle body; and the third layer profile cavity is provided with two die profile cavities in parallel, and the two die profile cavities are configured such that a yaw damper seat is mountable through the two die profile cavities.

In an embodiment, in a mounting area for mounting an extra-large under-vehicle apparatus, the lower fourth layer profile cavity is removable from the underframe side beam through processing, and the outer profile is configured to be kept for hanging the extra-large under-vehicle apparatus, and except for the surface for mounting the bogie, the shape of the underframe of the vehicle body in the length direction of the vehicle body is consistent.

In an embodiment, for the two die profile cavities of the third layer profile cavity arranged side by side, the inner profile cavity is configured to be used for hanging and mounting a bolt of the extra-large under-vehicle apparatus, and an outer cavity is configured to be used for hanging and mounting a bolt of under-vehicle apparatus compartment.

In an embodiment, the two die profile cavities are configured such that the mounting bolts of the extra-large under-vehicle apparatus and the mounting bolts of the under-vehicle apparatus compartment are alternatively arranged.

In an embodiment, one, two, or three of under-vehicle high-voltage cables, low-voltage cables and under-vehicle water piplinees are mounted in the third layer profile cavity and the fourth layer profile cavity.

In an embodiment, wall thickness of any of the first layer profile cavity, the second layer profile cavity, the third layer profile cavity and the fourth layer profile cavity is greater than 8mm, and the thickness of the bottom transverse wall of the die profile cavity is greater than 15mm.

In order to achieve another object described above, an underframe structure is provided according to the present application, including underframe floor, side beams, transverse beams, bolster beams and traction beams which form an integral bearing structure, and the side beam is the underframe side beam as described according to any one of the above embodiments.

In an embodiment, in the mounting area of the extra-large under-vehicle apparatus, the transverse beam is a first transverse beam, and the first transverse beam is connected with the inner side surface of the second layer profile cavity of the side beams on both sides and the upper underframe floor by welding.

In an embodiment, the height of the first transverse beam is ranged from 50mm to 65mm.

In an embodiment, in a mounting area of a small-scale under-vehicle apparatus, the small-scale under-vehicle apparatus is hung on a second transverse beam, and the second transverse beam is connected with the inner surfaces of the second layer profile cavity, the third layer profile cavity and the fourth layer profile cavity of the side beams on both sides and the upper underframe floor by welding.

In order to achieve the still another object described above, a rail vehicle is provided according to the present application, including a vehicle body, an underframe and a bogie, where the underframe is the underframe structure as described according to any one of the above embodiment.

The underframe side beam provided according to the present application has four layers of profile cavities stacked from top to bottom, and the third layer profile cavity has two parallel die profile cavities, which are used for hanging the side beam of the extra-large apparatus and mounting the yaw damper seat. After the fourth layer profile cavity is partially processed, the mounting surface of the bogie including the underframe side beam, the bolster beam, the traction beam and the like forms a plane in the connection area between the bogie and the vehicle body, and thus the problem that it is impossible to assemble the vehicle body and the bogie due to the limited structural size of the bogie can be solved. It can be applied to the mounting of the bogie with various width structural sizes and empty spring spacing, which reduces the influence of the vehicle limits on the structural size limitation of the bogie in the width direction, meets the mounting requirements of the extra-large apparatus and the apparatus compartment, and enables the appearance of the underframe consistent.

The underframe structure and the rail vehicle according to the present application are provided with the underframe side beam, and since the underframe side beam has the above technical effects, the underframe structure and the rail vehicle provided with the underframe side beam should also have corresponding technical effects.

### BRIEF DESCRIPTION OF THE DRAWINGS

FIG. 1 is a schematic view showing a mounting of a yaw damper seat for a high-speed EMUs in the conventional technology;
FIG. 2 is a schematic view showing a mounting of a bogie of the high-speed EMUs in the conventional technology;
FIG. 3 is a schematic cross-sectional view of an underframe side beam according to an embodiment of the present application;
FIG. 4 is a schematic view showing a processing of a side beam at a connection portion of a bogie and a vehicle body;
FIG. 5 is a schematic view showing a connection of a bogie and a vehicle body;
FIG. 6 is a schematic view showing a processing of a side beam at a mounting position of an under-vehicle extra-large apparatus;
FIG. 7 is a schematic view showing a hanging and mounting of an under-vehicle extra-large apparatus and an under-vehicle apparatus compartment;
FIG. 8 is a schematic view showing a mounting of an under-vehicle extra-large apparatus;
FIG. 9 is a schematic view showing a mounting of an under-vehicle high-voltage cable, a low-voltage cable and an under-vehicle water pipe in a side beam;
FIG. 10 is a schematic view of an underframe structure according to an embodiment of the present application;
FIG. 11 is a schematic cross-sectional view of an underframe at a mounting area of an extra-large apparatus;
FIG. 12 is a schematic cross-sectional view of an underframe at a mounting area of a small-scale apparatus.

Reference numerals in FIG. 1 and FIG. 2 are listed as follows:
1' underframe, 2' yaw damper seat, 3' bogie.

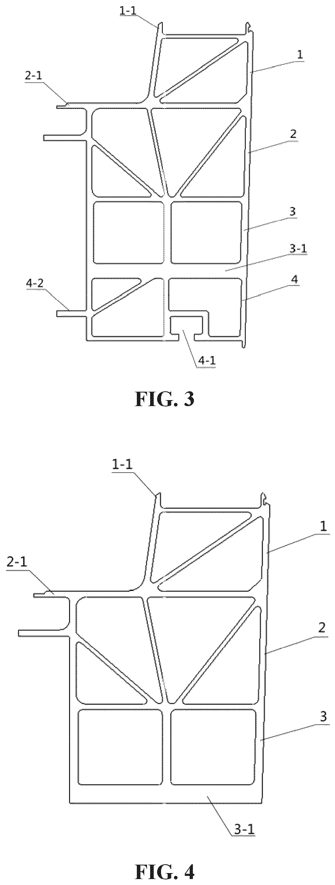

Reference numerals in FIG. 3 to FIG. 12 are listed as follows:
1 first layer profile cavity, 1-1 profile insertion structure, 2 second layer profile cavity, 2-1 profile lap-joint structure, 3 third layer profile cavity, 3-1 bottom transverse wall, 4 fourth layer profile cavity, 4-1 embedded slide groove, 4-2 inside lap-joint structure, 5 bogie, 6 bolt of extra-large apparatus, 7 bolt of under-vehicle apparatus compartment, 8-1 first transverse beam, 8-2 second transverse beam, 9 underframe floor, 10 under-vehicle apparatus compartment, 11 pipeline, 101 underframe structure.

### DETAILED DESCRIPTION OF THE EMBODIMENTS

In order to enable those skilled in the art to better understand the technical solutions of the present application, the present application is further described in detail with reference to the drawings and specific embodiments.

In this specification, the terms "up, down, left, right" are established based on the positional relationship shown in the attached drawings, and the corresponding positional relationship may vary with different attached drawings. The direction defined by the text in the specification takes precedence, and therefore, those terms should not be construed as an absolute limitation of the scope of protection. Moreover, the relationship terminologies such as "first", "second", and the like are only used herein to distinguish one component from another having the same name, rather than to necessitate or imply that the actual relationship or order exists between the components.

With reference to FIG. 3, FIG. 3 is a schematic cross-sectional view of an underframe side beam according to an embodiment of the present application.

As shown in the drawing, in a specific embodiment, the underframe side beam and an underframe structure with the underframe side beam provided according to the present application can meet the limit requirements of different vehicles at home and abroad on the outer contour of the vehicle body structure, and can flexibly match the vehicle body structures with different vehicle widths.

Specifically, the underframe side beam is a large-section aluminum alloy profile structure formed by integral extrusion, which can improve the vertical rigidity and natural frequency of vertical bending of the side beam. Based on the mounting requirements of a bogie 5, an under-vehicle apparatus and an under-vehicle apparatus compartment 10, the side beam profile is provided with a laminated profile structure with four layers of profile cavities from top to bottom, including the first layer profile cavity 1, the second layer profile cavity 2, the third layer profile cavity 3 and the fourth layer profile cavity 4 which are sequentially stacked from top to bottom. An outer surface of the first layer profile cavity 1 is on a same profile surface with outer surfaces of the second layer profile cavity 2, the third layer profile cavity 3 and the fourth layer profile cavity 4, a width of the first layer profile cavity 1 is smaller than that of the second layer profile cavity 2, the third layer profile cavity 3 and the fourth layer profile cavity 4, and an inner surface of the first layer profile cavity 1 forms a step portion with inner surfaces of the second layer profile cavity 2, the third layer profile cavity 3 and the fourth layer profile cavity 4.

A top portion of the first layer profile cavity 1 is provided with a profile insertion structure 1-1 for inserting and welding with a side wall of the vehicle body. An inner side surface of the second layer profile cavity 2 is provided with a profile lap-joint structure 2-1 with an opening, facing an inner side of the vehicle body, at an upper edge. The third layer profile cavity 3 has two die profile cavities in parallel, and a thickness of a bottom transverse wall 3-1 of each die profile cavity is greater than that of a lateral wall and a top transverse wall, so as to form a plane structure for mounting the under-vehicle apparatus, the yaw damper seat, the under-vehicle apparatus compartment 10 and the connection between the bogie 5 and the vehicle body.

A bottom portion of the fourth layer profile cavity 4 is provided with an embedded slide groove 4-1, and an inner side surface of the fourth layer profile cavity 4 is provided with an inside lap-joint structure 4-2 for lap-welding of the underframe transverse beam. A slide groove 4-1 is used for hanging and mounting the bolt of the under-vehicle apparatus compartment, which meets the mounting requirements of the under-vehicle apparatus compartment, and the inside lap-joint structure 4-2 is used for the lap-welding of a large transverse beam of the underframe.

The wall thickness of any of the first layer profile cavity 1, the second layer profile cavity 2, the third layer profile cavity 3 and the fourth layer profile cavity 4 is greater than 8mm, and the thickness of the bottom transverse wall 3-1 of the die profile cavity is greater than 15mm. This partial thickened portion is used for subsequent processing to remove the fourth layer profile cavity 4, so as to form a plane structure, which is used for the mounting of the extra-large under-vehicle apparatus, the yaw damper seat and the under-vehicle apparatus compartment 10, and the connection between the bogie 5 and the vehicle body.

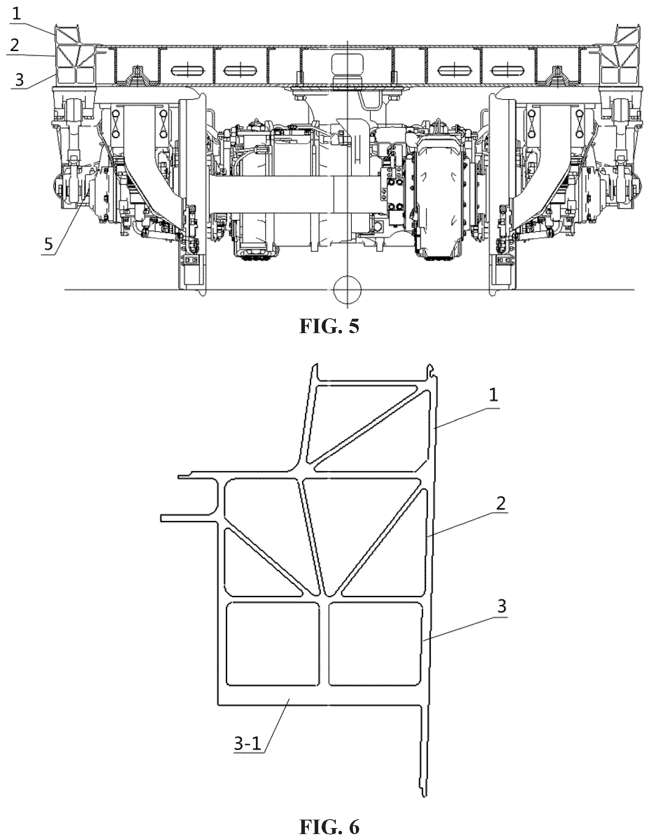

With reference to FIG. 4 and FIG. 5 together, FIG. 4 is a schematic view showing a processing of a side beam at a connection portion of a bogie and a vehicle body, and FIG. 5 is a schematic view showing a connection of a bogie and a vehicle body.

As shown in the drawings, in a local area where the bogie 5 is connected with the vehicle body, the material of the lower fourth layer profile cavity 4 is removed from the side beam profile by processing, so that the underframe side beam, bolster beam, traction beam and transverse beam are formed into a plane in this area, which meets the structural size and mounting space requirements of the bogies of the vehicles with different limit requirements in the vehicle width direction, and the yaw damper seat is mounted through the two die profile cavities of the third layer profile cavity 3 of the side beam. By optimizing the mounting structure of the yaw damper seat of the bogie, there is no need to weld the yaw damper seat on the vehicle body of the high-speed EMUs as in the conventional technology, which reduces the welding work of the underframe, reduces the welding stress, and improves the fatigue strength of the underframe mounting area of the yaw damper seat.

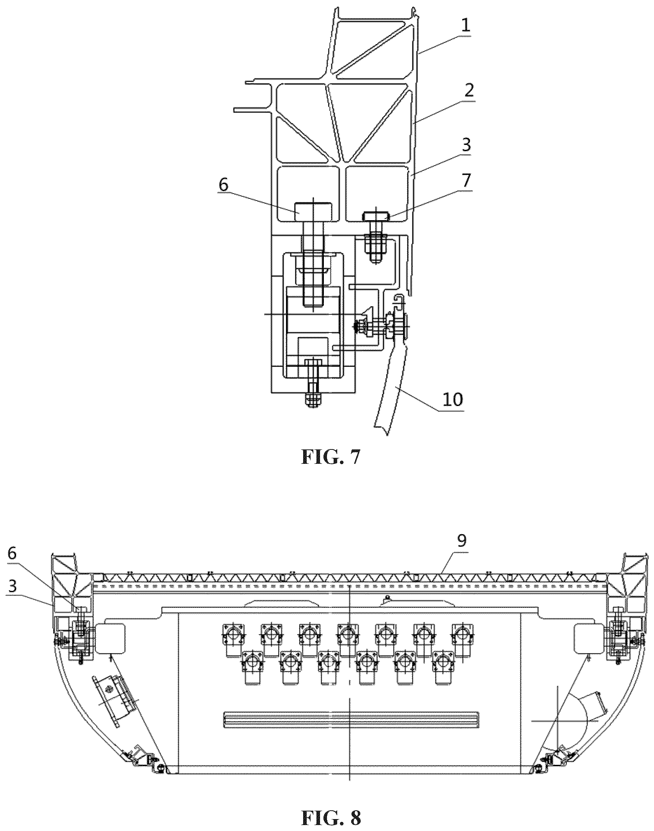

With reference to FIG. 6, FIG. 7 and FIG. 8, FIG. 6 is a schematic view showing a processing of a side beam at a mounting position of an under-vehicle extra-large apparatus, FIG. 7 is a schematic view showing a hanging and mounting of an under-vehicle extra-large apparatus and an under-vehicle apparatus compartment, and FIG. 8 is a schematic view showing a mounting of an under-vehicle extra-large apparatus.

The underframe side beam and the underframe structure according to the present application can meet the mounting space requirements and the mounting structure strength requirement of the extra-large under-vehicle apparatus by processing the partial profiles of the side beam, and two mounting modes, namely hanging and mounting the underframe transverse beam and hanging and mounting the underframe side beam, can be applied to the under-vehicle apparatus.

Compared with the high-speed EMUs in the conventional technology, the structure size and weight of the extra-large under-vehicle apparatus, such as double-current traction transformer and double-current traction converter are greatly increased (note: it is easy to distinguish between the extra-large under-vehicle apparatus and the small-scale under-vehicle apparatus for those skilled in the art, therefore "extra-large " and " small-scale " herein are not vague terms, and if necessary, the extra-large under-vehicle apparatus can be defined as a first class under-vehicle apparatus and the small-scale under-vehicle apparatus as a second class under-vehicle apparatus). Due to the restriction of the vehicle limits, the width of the underframe of the vehicle body is limited. In order to meet the apparatus mounting, the method for hanging and mounting the side beam is adopted to increase the available apparatus mounting space.

In a process of designing, the matching width and length of the underframe is provided based on the limit requirements of different vehicles at home and abroad. For the vehicle body with narrow limit and the extra-large apparatus, the mounting method of hanging the under-vehicle apparatus side beam is adopted. The lower fourth layer profile cavity 4 is removed from the underframe side beam in the apparatus mounting area through processing, and the outer profile is kept to meet the requirements of apparatus mounting space and hanging and mounting of the bolt. For the two die profile cavities of the third layer profile cavity 3 arranged side by side, the inner profile cavity is used for hanging and mounting the bolt of extra-large apparatus 6, and the outer profile cavity is used for hanging and mounting the bolt of under-vehicle apparatus compartment 7. The bolt of extra-large apparatus 6 and the bolt of under-vehicle apparatus compartment 7 are alternatively arranged, which is convenient for apparatus mounting and maintenance.

In the mounting area of the extra-large under-vehicle apparatus, the lower fourth layer profile cavity 4 is removed from the underframe side beam through processing, and the outer profile is kept for hanging the extra-large under-vehicle apparatus. Except for the mounting area of the bogie, the shape of the underframe of the vehicle body in the length direction of the vehicle body is consistent, which is beneficial to the artistic effect of the overall appearance of the vehicle.

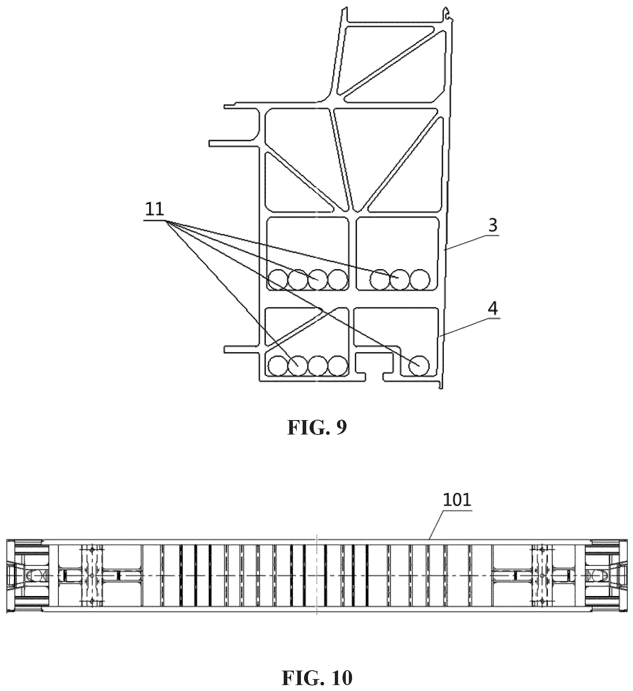

Cables and pipelines 11 such as under-vehicle high-voltage cables, low-voltage cables and under-vehicle water pipes may be mounted in the third layer profile cavity 3 and the fourth layer profile cavity 4 of the underframe side beam (see FIG. 9). The four profile cavities here have regular design and relatively large cross-sectional area, which can meet the mounting requirements of the cables and water pipes. Moreover, it is beneficial to protect the cables and water pipes, reduce the space occupied by the under-vehicle cables and the water pipes, and facilitate the arrangement and mounting of the under-vehicle apparatus. The mounting profile cavities or spaces available for the cables and water pipes are configured in detail based on the specific arrangement and mounting of the extra-large apparatus to meet the needs of vehicle wiring and pipe laying.

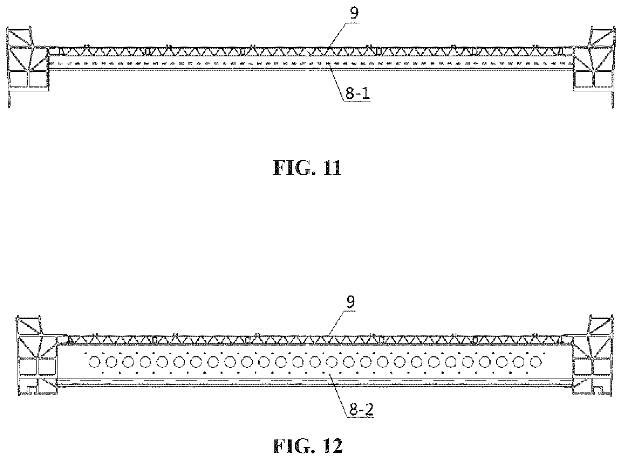

With reference to FIG. 10, FIG. 11 and FIG. 12, FIG. 10 is a schematic view of an underframe structure according to an embodiment of the present application, FIG. 11 is a schematic cross-sectional view of an underframe at a mounting area of an extra-large apparatus, and FIG. 12 is a schematic cross-sectional view of an underframe at a mounting area of a small-scale apparatus.

As shown in the drawings, the underframe structure 101 provided according to the present application adopts the underframe side beam described above, and is welded and connected with underframe floor 9, transverse beam, bolster beam, traction beam, buffer beam and the like to form an integral structure, so as to bear the underframe structure of the high-speed EMUs.

In the mounting area of the extra-large under-vehicle apparatus, the extra-large under-vehicle apparatus is mounted by hanging the side beam. Since the height of the apparatus is restricted by the height of the apparatus compartment space, the height of the first transverse beam 8-1 is relatively small, so as to give up enough mounting space. In order to ensure the strength and rigidity of the vehicle body in this area, the height of the first transverse beam 8-1 is about 50mm to 65mm, and the first transverse beam 8-1 is connected with the inner side surface of the second layer profile cavity 2 of the underframe side beams on both sides and the underframe floor 9 by welding.

In the mounting area of the small-scale under-vehicle apparatus, the small-scale under-vehicle apparatus is hung on the second transverse beam 8-2. Since the space occupied by the small-scale under-vehicle apparatus is relatively small, the height of the second transverse beam 8-2 is relatively large, and the second transverse beam 8-2 is connected with the inner surfaces of the second layer profile cavity 2, the third layer profile cavity 3 and the fourth layer profile cavity 4 of the underframe side beams on both sides and the upper underframe floor 9 by welding.

The above embodiments are only preferred solutions of the present application, and the present application is not specifically limited thereto. On this basis, targeted adjustments can be made according to actual needs, thereby obtaining different embodiments. For example, the shape of the profile cavity is changed to a shape with similar functions, or the shape and distribution of the reinforcement ribs inside the profile cavity are adjusted, and so on. Since there are many implementations, no more examples are taken and illustrated here.

The present application can effectively solve the problems of the mounting of the bogie and the vehicle body and the mounting of the large-scale apparatus under the condition of limited vehicle width as a result of meeting the limit requirements of different vehicles at home and abroad, and especially solve the problem of the mounting space and structure of the bogie and the large-scale under-vehicle apparatus that meets the limit requirements of narrow vehicles.

In addition to the above-mentioned underframe side beam and the underframe structure, a rail vehicle is further provided according to the present application, such as the high-speed EMUs or a high-speed train, which has a plurality of carriages, and each of the carriages includes a vehicle body, an underframe and a bogie. The underframe is the underframe structure with the underframe side beams provided according to the present application as described above, and the rest structures of the rail vehicle are referred to the conventional technology, which will not be repeated here.

The underframe side beam, the underframe structure and the rail vehicle provided according to the present application are described in detail above. The principle and the embodiments of the present application are illustrated herein by specific examples. The above description of the examples is only intended to facilitate the understanding of the concept of the present application. It should be noted that, for the person skilled in the art, many modifications and improvements may be made to the present application without departing from the principle of the present application, and these modifications and improvements are also deemed to fall into the protection scope of the present application defined by the claims.

## Claims

1. An underframe side beam for a railway vehicle body, which is an integrally extruded aluminum alloy profile structure, comprising a first layer profile cavity (1), a second layer profile cavity (2), a third layer profile cavity (3) and a fourth layer profile cavity (4), wherein a top portion of the first layer profile cavity (1) is provided with a profile insertion structure (1-1) for inserting and welding with a side wall of a vehicle body; an inner side surface of the second layer profile cavity (2) is provided with a profile lap-joint structure (2-1) with an opening, facing an inner side of the vehicle body, at an upper edge; and a bottom transverse wall (3-1) of the third layer profile cavity (3) is a thickened profile cavity wall, which is used to form a plane structure after the fourth layer profile cavity is partially removed,
wherein an outer surface of the first layer profile cavity (1) is on a same profile surface with outer surfaces of the second layer profile cavity (2), the third layer profile cavity (3) and the fourth layer profile cavity (4), and, widths of the second layer profile cavity (2), the third layer profile cavity (3) and the fourth layer profile cavity (4) are substantially same, a width of the first layer profile cavity (1) is smaller than a width of the second layer profile cavity (2), the third layer profile cavity (3) and the fourth layer profile cavity (4), and an inner surface of the first layer profile cavity (1) forms a step portion with inner surfaces of the second layer profile cavity (2), the third layer profile cavity (3) and the fourth layer profile cavity (4);
wherein a bottom portion of the fourth layer profile cavity (4) is provided with an embedded slide groove (4-1) for hanging and mounting a bolt of an under-vehicle apparatus compartment (10), and an inner side surface of the fourth layer profile cavity (4) is provided with an inside lap-joint structure (4-2) for lap-welding of an underframe transverse beam (8-1, 8-2);
**characterized in that**, in a local area where a bogie (5) of the railway vehicle is connected with the vehicle body, the lower fourth layer profile cavity (4) is configured to be removed from the side beam profile by processing, so that a mounting surface for mounting the bogie (5) at a lower portion of the underframe side beam is a plane, and the third layer profile cavity (3) is provided with two die profile cavities in parallel, and the two die profile cavities are configured such that a yaw damper seat is mountable through the two die profile cavities.

2. The underframe side beam according to claim 1, wherein in a mounting area for mounting an extra-large under-vehicle apparatus, the lower fourth layer profile cavity is removable from the underframe side beam through processing, and the outer profile is configured to be kept for hanging the extra-large under-vehicle apparatus, and except for the surface for mounting the bogie (5), the shape of the underframe of the vehicle body in the length direction of the vehicle body is consistent.

3. The underframe side beam according to claim 2, wherein for the two die profile cavities of the third layer profile cavity (3) arranged side by side, the inner profile cavity is configured to be used for hanging and mounting a bolt (6) of the extra-large under-vehicle apparatus, and an outer cavity is configured to be used for hanging and mounting a bolt (7) of under-vehicle apparatus compartment (10).

4. The underframe side beam according to claim 3, wherein the two die profile cavities are configured such that the mounting bolts of the extra-large under-vehicle apparatus and the mounting bolts of the under-vehicle apparatus compartment are alternatively arranged.

5. The underframe side beam according to any one of claims 1 to 4, wherein one, two or three of under-vehicle high-voltage cables, low-voltage cables and under-vehicle water pipelines (11) are mounted in the third layer profile cavity (3) and the fourth layer profile cavity.

6. The underframe side beam according to any one of claims 1 to 4, wherein wall thickness of the first layer profile cavity (1), the second layer profile cavity (2), the third layer profile cavity (3) and the fourth layer profile cavity (4) is greater than 8 mm, and the thickness of the bottom transverse wall of the die profile cavity is greater than 15 mm.

7. An underframe structure (101), comprising an underframe floor (9), the side beams according to any one of the claims 1 to 6, transverse beams (8-1, 8-2), bolster beams and traction beams which form an integral bearing structure.

8. The underframe structure according to claim 7, wherein in a mounting area of an extra-large under-vehicle apparatus, the transverse beam is a first transverse beam (8-1), and the first transverse beam (8-1) is connected with the inner side surface of the second layer profile cavity (2) of the side beams on both sides and the upper underframe floor by welding.

9. The underframe structure according to claim 8, wherein a height of the first transverse beam (8-1) is ranged from 50 mm to 65 mm.

10. The underframe structure according to claim 7, wherein in a mounting area of a small-scale under-vehicle apparatus, the small-scale under-vehicle apparatus is hung on a second transverse beam (8-2), and the second transverse beam (8-2) is connected with the inner surfaces of the second layer profile cavity (2), the third layer profile cavity (3) and the fourth layer profile cavity (4) of the underframe side beams on both sides and the upper underframe floor by welding.

11. A rail vehicle, comprising a vehicle body, an underframe and a bogie (5), wherein the underframe is the underframe structure according to any one of claims 7 to 10.

## Patentansprüche

1. Untergestellseitenträger für einen Schienenfahrzeugwagenkasten, der eine einstückig stranggepresste Aluminiumlegierungsprofilstruktur ist, mit einem Profilhohlraum (1) einer ersten Schicht, einem Profilhohlraum (2) einer zweiten Schicht, einem Profilhohlraum (3) einer dritten Schicht und einem Profilhohlraum (4) einer vierten Schicht, wobei ein oberer Abschnitt des Profilhohlraums (1) der ersten Schicht mit einer Profileinsatzstruktur (1-1) zum Einsetzen und Verschweißen mit einer Seitenwand eines Fahrzeugwagenkastens versehen ist, eine Innenseitenfläche des Profilhohlraums (2) der zweiten Schicht an einem oberen Rand mit einer Profilüberlappungsstoßstruktur (2-1) mit einer Öffnung versehen ist, die einer Innenseite des Fahrzeugwagenkastens zugewandt ist, und eine Bodenquerwand (3-1) des Profilhohlraums (3) der dritten Schicht eine verdickte Profilhohlraumwand ist, die dazu dient, eine ebene Struktur zu bilden, nachdem der Profilhohlraum der vierten Schicht teilweise entfernt ist,
wobei eine Außenfläche des Profilhohlraums (1) der ersten Schicht auf einer gleichen Profilfläche mit Außenflächen des Profilhohlraums (2) der zweiten Schicht, des Profilhohlraums (3) der dritten Schicht und des Profilhohlraums (4) der vierten Schicht liegt und Breiten des Profilhohlraums (2) der zweiten Schicht, des Profilhohlraums (3) der dritten Schicht und des Profilhohlraums (4) der vierten Schicht im Wesentlichen gleich sind, eine Breite des Profilhohlraums (1) der ersten Schicht kleiner ist als eine Breite des Profilhohlraums (2) der zweiten Schicht, des Profilhohlraums (3) der dritten Schicht und des Profilhohlraums (4) der vierten Schicht und eine Innenfläche des Profilhohlraums (1) der ersten Schicht einen Absatzabschnitt mit Innenflächen des Profilhohlraums (2) der zweiten Schicht, des Profilhohlraums (3) der dritten Schicht und des Profilhohlraums (4) der vierten Schicht bildet,
wobei ein Bodenabschnitt des Profilhohlraums (4) der vierten Schicht mit einer eingebetteten Gleitnut (4-1) zum Aufhängen und Befestigen einer Schraube eines unter dem Fahrzeug befindlichen Vorrichtungsfachs (10) versehen ist und eine Innenseitenfläche des Profilhohlraums (4) der vierten Schicht mit einer inneren Überlappungsstoßstruktur (4-2) zum Überlappungsschweißen eines Untergestellquerträgers (8-1, 8-2) versehen ist,
**dadurch gekennzeichnet, dass** in einem lokalen Bereich, in dem ein Drehgestell (5) des Schienenfahrzeugs mit dem Fahrzeugwagenkasten verbunden ist, der untere Profilhohlraum (4) der vierten Schicht dazu ausgebildet ist, durch Bearbeiten von dem Seitenträgerprofil entfernt zu werden, sodass eine Montagefläche zur Befestigung des Drehgestells (5) an einem unteren Abschnitt des Untergestellseitenträgers eine Ebene ist, und der Profilhohlraum (3) der dritten Schicht mit zwei parallel verlaufenden Formprofilhohlräumen versehen ist und die beiden Formprofilhohlräume so ausgebildet sind, dass eine Gierdämpferaufnahme durch die beiden Formprofilhohlräume hindurch montiert werden kann.

2. Untergestellseitenträger nach Anspruch 1, bei dem in einem Montagebereich zur Befestigung einer besonders großen unter dem Fahrzeug befindlichen Vorrichtung der untere Profilhohlraum der vierten Schicht mittels Bearbeiten von dem Untergestellseitenträger entfernt werden kann und das Außenprofil so ausgebildet ist, dass es zum Aufhängen der besonders großen unter dem Fahrzeug befindlichen Vorrichtung erhalten bleibt, und mit Ausnahme der Fläche zur Befestigung des Drehgestells (5) die Form des Untergestells des Fahrzeugwagenkastens in Längsrichtung des Fahrzeugwagenkastens gleichbleibend ist.

3. Untergestellseitenträger nach Anspruch 2, bei dem bei den beiden nebeneinander angeordneten Formprofilhohlräumen des Profilhohlraums (3) der dritten Schicht der innere Profilhohlraum so ausgebildet ist, dass er zum Aufhängen und Befestigen einer Schraube (6) der besonders großen unter dem Fahrzeug befindlichen Vorrichtung dient, und ein äußerer Hohlraum so ausgebildet ist, dass er zum Aufhängen und Befestigen einer Schraube (7) des unter dem Fahrzeug befindlichen Vorrichtungsfachs (10) dient.

4. Untergestellseitenträger nach Anspruch 3, bei dem die beiden Formprofilhohlräume so ausgebildet sind, dass die Befestigungsschrauben der besonders großen unter dem Fahrzeug befindlichen Vorrichtung und die Befestigungsschrauben des unter dem Fahrzeug befindlichen Vorrichtungsfachs abwechselnd angeordnet sind.

5. Untergestellseitenträger nach einem der Ansprüche 1 bis 4, bei dem unter dem Fahrzeug befindliche Hochspannungskabel und/oder Niederspannungskabel und/oder unter dem Fahrzeug befindliche Wasserleitungen (11) in dem Profilhohlraum (3) der dritten Schicht und dem Profilhohlraum der vierten Schicht angebracht sind.

6. Untergestellseitenträger nach einem der Ansprüche 1 bis 4, bei dem die Wandstärke des Profilhohlraums (1) der ersten Schicht, des Profilhohlraums (2) der zweiten Schicht, des Profilhohlraums (3) der dritten Schicht und des Profilhohlraums (4) der vierten Schicht größer als 8 mm ist und die Stärke der Bodenquerwand des Formprofilhohlraums größer als 15 mm ist.

7. Untergestellstruktur (101), mit einem Untergestellboden (9), den Seitenträgern nach einem der Ansprüche 1 bis 6, Querträgern (8-1, 8-2), Unterstützungsträgern und Zugträgern, die eine integrale Tragstruktur bilden.

8. Untergestellstruktur nach Anspruch 7, bei der in einem Montagebereich einer besonders großen unter dem Fahrzeug befindlichen Vorrichtung der Querträger ein erster Querträger (8-1) ist und der erste Querträger (8-1) mit der Innenseitenfläche des Profilhohlraums (2) der zweiten Schicht der Seitenträger an beiden Seiten und dem oberen Untergestellboden durch Verschweißen verbunden ist.

9. Untergestellstruktur nach Anspruch 8, bei der eine Höhe des ersten Querträgers (8-1) im Bereich von 50 mm bis 65 mm liegt.

10. Untergestellstruktur nach Anspruch 7, bei der in einem Montagebereich einer kleinformatigen unter dem Fahrzeug befindlichen Vorrichtung die kleinformatige unter dem Fahrzeug befindliche Vorrichtung an einem zweiten Querträger (8-2) aufgehängt ist und der zweite Querträger (8-2) mit den Innenflächen des Profilhohlraums (2) der zweiten Schicht, des Profilhohlraums (3) der dritten Schicht und des Profilhohlraums (4) der vierten Schicht der Untergestellseitenträger an beiden Seiten und dem oberen Untergestellboden durch Verschweißen verbunden ist.

11. Schienenfahrzeug, mit einem Fahrzeugwagenkasten, einem Untergestell und einem Drehgestell (5), wobei das Untergestell die Untergestellstruktur nach einem der Ansprüche 7 bis 10 ist.

## Revendications

1. Barre latérale de châssis pour caisse de véhicule ferroviaire, qui est une structure de profilé en alliage d'aluminium extrudée d'un seul tenant, comprenant une cavité de profilé de première couche (1), une cavité de profilé de deuxième couche (2), une cavité de profilé de troisième couche (3) et une cavité de profilé de quatrième couche (4), une partie supérieure de la cavité de profilé de première couche (1) étant pourvue d'une structure d'insertion de profilé (1-1) pour l'insertion et le soudage avec une paroi latérale d'une caisse de véhicule, une surface latérale intérieure de la cavité de profilé de deuxième couche (2) étant pourvue, au niveau d'un bord supérieur, d'une structure de joint à recouvrement de profilé (2-1) présentant une ouverture, faisant face à un côté intérieur de la caisse de véhicule, et une paroi transversale inférieure (3-1) de la cavité de profilé de troisième couche (3) étant une paroi de cavité de profilé épaissie utilisée pour former une structure plane après le retrait partiel de la cavité de profilé de quatrième couche,
une surface extérieure de la cavité de profilé de première couche (1) se trouvant sur une même surface de profilé avec des surfaces extérieures de la cavité de profilé de deuxième couche (2), la cavité de profilé de troisième couche (3) et la cavité de profilé de quatrième couche (4), et des largeurs de la cavité de profilé de deuxième couche (2), de la cavité de profilé de troisième couche (3) et de la cavité de profilé de quatrième couche (4) étant sensiblement identiques, une largeur de la cavité de profilé de première couche (1) étant inférieure à une largeur de la cavité de profilé de deuxième couche (2), la cavité de profilé de troisième couche (3) et la cavité de profilé de quatrième couche (4), et une surface intérieure de la cavité de profilé de première couche (1) formant une partie en gradins avec des surfaces intérieures de la cavité de profilé de deuxième couche (2), de la cavité de profilé de troisième couche (3) et de la cavité de profilé de quatrième couche (4),
une partie inférieure de la cavité de profilé de quatrième couche (4) étant pourvue d'une rainure coulissante encastrée (4-1) pour suspendre et monter un boulon d'un compartiment d'appareil (10) se trouvant sous le véhicule, et une surface latérale intérieure de la cavité de profilé de quatrième couche (4) étant pourvue d'une structure de joint à recouvrement intérieur (4-2) pour le soudage par recouvrement d'une barre transversale de châssis (8-1, 8-2),
**caractérisé en ce que**, dans une zone locale où un bogie (5) du véhicule ferroviaire est relié à la caisse du véhicule, la cavité de profilé de quatrième couche inférieure (4) est réalisée de manière à être retirée du profilé de barre latérale par usinage, de sorte qu'une surface de montage pour monter le bogie (5) au niveau d'une partie inférieure de la barre latérale de châssis est un plan, et la cavité de profilé de troisième couche (3) est pourvue de deux cavités de profilé de matrice parallèles, et les deux cavités de profilé de matrice sont réalisées de telle sorte qu'un siège d'amortisseur de lacet peut être monté à travers les deux cavités de profilé de matrice.

2. Barre latérale de châssis selon la revendication 1, dans laquelle, dans une zone de montage pour le montage d'un appareil de très grande taille se trouvant sous le véhicule, la cavité de profilé de quatrième couche inférieure peut être retirée de la barre latérale de châssis par usinage, et le profilé extérieur est réalisé de manière à être conservé pour suspendre l'appareil de très grande taille se trouvant sous le véhicule, et à l'exception de la surface pour le montage du bogie (5), la forme du châssis de la caisse de véhicule est constante dans le sens de la longueur de la caisse du véhicule.

3. Barre latérale de châssis selon la revendication 2, dans laquelle, pour les deux cavités de profilé de matrice de la cavité de profilé de troisième couche (3) agencées côte à côte, la cavité de profilé intérieure est réalisée de manière à être utilisée pour suspendre et monter un boulon (6) de l'appareil de très grande taille se trouvant sous le véhicule, et une cavité extérieure est réalisée de manière à être utilisée pour suspendre et monter un boulon (7) du compartiment d'appareil (10) se trouvant sous le véhicule.

4. Barre latérale de châssis selon la revendication 3, dans laquelle les deux cavités de profilé de matrice sont réalisées de telle sorte que les boulons de montage de l'appareil de très grande taille se trouvant sous le véhicule et les boulons de montage du compartiment d'appareil se trouvant sous le véhicule sont agencés en alternance.

5. Barre latérale de châssis selon l'une des revendications 1 à 4, dans laquelle un, deux ou trois câbles haute tension se trouvant sous le véhicule, câbles basse tension et conduites d'eau (11) se trouvant sous le véhicule sont montés dans la cavité de profilé de troisième couche (3) et la cavité de profilé de quatrième couche.

6. Barre latérale de châssis selon l'une des revendications 1 à 4, dans laquelle l'épaisseur de paroi de la cavité de profilé de première couche (1), de la cavité de profilé de deuxième couche (2), de la cavité de profilé de troisième couche (3) et de la cavité de profilé de quatrième couche (4) est supérieure à 8 mm, et l'épaisseur de la paroi transversale inférieure de la cavité de profilé de matrice est supérieure à 15 mm.

7. Structure de châssis (101), comprenant un plancher de châssis (9), les barres latérales selon l'une des revendications 1 à 6, des barres transversales (8-1, 8-2), des barres de support et des barres de traction qui forment une structure portante intégrale.

8. Structure de châssis selon la revendication 7, dans laquelle, dans une zone de montage d'un appareil de très grande taille se trouvant sous le véhicule, la barre transversale est une première barre transversale (8-1), et la première barre transversale (8-1) est reliée par soudage à la surface latérale intérieure de la cavité de profilé de deuxième couche (2) des barres latérales des deux côtés et au plancher supérieur de châssis.

9. Structure de châssis selon la revendication 8, dans laquelle une hauteur de la première barre transversale (8-1) est comprise entre 50 mm et 65 mm.

10. Structure de châssis selon la revendication 7, dans laquelle, dans une zone de montage d'un appareil de petite taille se trouvant sous le véhicule, l'appareil de petite taille se trouvant sous le véhicule est suspendu à une deuxième barre transversale (8-2), et la deuxième barre transversale (8-2) est reliée par soudage aux surfaces intérieures de la cavité de profilé de deuxième couche (2), la cavité de profilé de troisième couche (3) et la cavité de profilé de quatrième couche (4) des barres latérales de châssis des deux côtés et au plancher supérieur de châssis.

11. Véhicule ferroviaire, comprenant une caisse de véhicule, un châssis et un bogie (5), dans lequel le châssis est la structure de châssis selon l'une des revendications 7 à 10.
